# EUROPÄISCHE PATENTSCHRIFT

(11) **EP 2 641 285 B1**
(45) Veröffentlichungstag und Bekanntmachung des Hinweises auf die Patenterteilung: **25.02.2015**
(21) Anmeldenummer: 11767635.3
(22) Anmeldetag: 07.10.2011
(51) Int. Cl.: H01M 2/10, F16K 24/00

(54) **ENERGIESPEICHER FÜR EIN KRAFTFAHRZEUG MIT EINER VERSCHLUSSVORRICHTUNG ZUR KONDENSATAUSLEITUNG**
ENERGY STORAGE FOR A MOTOR VEHICLE WITH A LOCKING DEVICE FOR CONDENSATE DRAINAGE
STOCKAGE D'ÉNERGIE POUR UN VÉHICULE AVEC UN DISPOSITIF DE VERROUILLAGE POUR ÉVACUATION DES CONDENSATS

(30) Priorität: 17.11.2010 DE 102010051687
(43) Veröffentlichungstag der Anmeldung: 25.09.2013
(73) Patentinhaber: Bayerische Motoren Werke Aktiengesellschaft, 80809 München (DE)
(72) Erfinder: HEGER, Martin, 85232 Kreuzholzhausen (DE)
(86) Internationale Anmeldenummer: PCT/EP2011/004998
(87) Internationale Veröffentlichungsnummer: WO 2012/065664

(56) Entgegenhaltungen:
- WO-A1-2009/119037
- DE-A1-102004 005 394
- US-A- 5 538 807
- US-A- 5 620 057

## Beschreibung

Die Erfindung betrifft einen Energiespeicher für ein Kraftfahrzeug, welcher beispielsweise in Elektrofahrzeugen oder Hybrid-Fahrzeugen die notwendige Energie für den Antrieb bereitstellt. Ein solcher Energiespeicher umfasst ein abgeschlossenes Gehäuse zur Aufnahme zumindest eines Energiespeichermoduls mit einer jeweiligen Anzahl an Speicherzellen. Um sicher zu stellen, dass bei der Überwindung großer Höhenunterschiede in kurzer Zeit keine (plastische) Verformung des Gehäuses erfolgt, ist ein Druckausgleichselement zum Druckausgleich eines im Inneren des Gehäuses herrschenden Innendrucks mit einem Umgebungsdruck vorgesehen. Das Druckausgleichselement ist an einer Gehäusefläche angeordnet. Darüber hinaus umfasst der Energiespeicher typischerweise eine Verschlussvorrichtung am Boden des Gehäuses zur Abfuhr von in dem Gehäuseinneren sich sammelnden Kondensats.

Das für einen Energiespeicher verwendete Gehäuse muss allgemein eine Reihe von Anforderungen erfüllen, um den wechselnden Betriebsbedingungen eines Kraftfahrzeugs gerecht zu werden. So dient das Gehäuse dazu, das Energiespeichermodul vor Umgebungseinflüssen, wie z.B. Wasser und Schmutz, zu schützen. Das Gehäuse muss deshalb prinzipiell bis zu einem bestimmten zulässigen Wassereintrag (sog. zulässige Leckrate) abgedichtet ausgebildet sein.

Im Betrieb des Energiespeichers in einem Kraftfahrzeug sind die Speicherzellen des zumindest einen Energiespeichermoduls, vor allem durch Entlade- und Ladevorgänge der Speicherzellen, Temperaturschwankungen unterworfen. Im Betrieb des Energiespeichermoduls entstehende Wärme wird üblicherweise durch einen Kühler aus dem Inneren abgeführt. Hierdurch ist die Entstehung eines Kondensats möglich, welches sich am Boden des Gehäuses sammelt. Da dies auf Dauer zu Störungen führen kann, ist ein Abfluss des Kondensats erforderlich.

Wird ein Energiespeicher in einem Kraftfahrzeug eingesetzt, so ist aufgrund der wechselnden Einsatzbedingungen, z.B. in unterschiedlichen Temperatur- und/oder Höhenregionen, eine Einrichtung vorzusehen, die den im Inneren des Gehäuses vorherrschenden Druck an den Umgebungsdruck angleicht. Diese Einrichtung wird durch das Druckausgleichselement bereitgestellt.

Derartige Druckausgleichselemente werden in DE 10 2004 005 394 A1 offenbart.

Zur Realisierung der oben beschriebenen Funktionen - Dichtigkeit, Druckausgleich zwischen Gehäuseinnerem und Umgebung, Kondensatabfuhr - sind aus dem Stand der Technik, jeweils für sich getrennt, unterschiedliche Lösungen bekannt.

Kondensatabführungen bzw. Wasserabführungen mit Schwimmern werden im Umfeld von Kraftfahrzeugen z.B. an Öffnungen von Hohlräumen in der Karosserie eingesetzt. Solche Kondensatabfuhrelemente sind typischerweise an der Bodenfläche des Gehäuses des Energiespeichers angeordnet und ständig geöffnet. Wenn Wasser bei einer Wasserdurchfahrt des Kraftfahrzeugs von unten in das Innere des Gehäuses eindringen will, so verschließt der Schwimmer eine ihm zugeordnete Gehäuseöffnung und dichtet das Gehäuse ab. Ein derartiges Kondensatabfuhrelement ist jedoch bei solchen Energiespeichersystemen nicht einsetzbar, bei denen hohe Anforderungen bzgl. der Bauteilhöhe gegeben sind. Darüber hinaus weist ein, auf dem Schwimmerprinzip basierendes Kondensatabfuhrelement den Nachteil auf, dass weitergehende Maßnahmen ergriffen werden müssen, um eine Verschmutzung des Schwimmers zu verhindern. Nur dann kann die Funktionsfähigkeit über einen langen Zeitraum gewährleistet werden.

Bekannt sind ebenfalls aktive Systeme zur Kondensatabfuhr, welche eine Pumpe verwenden. Durch die Pumpe wird in dem Gehäuse anfallendes Kondensat aus diesem gefördert. Eine solche Kondensatabfuhrvorrichtung kann zwar Bauraum-Limitierungen überwinden. Jedoch sind die Kosten im Vergleich zu einem passiven System erheblich höher, da neben der Pumpe auch weitere elektrische Komponenten zu deren Ansteuerung vorgesehen werden müssen.

Es ist daher Aufgabe der vorliegenden Erfindung, einen Energiespeicher für ein Kraftfahrzeug anzugeben, bei dem eine Kondensatabfuhr auf einfachere und kostengünstige Weise bewerkstelligt werden kann. Gleichzeitig soll die Kondensatabfuhr einen nur minimalen Bedarf an Bauraum aufweisen.

Diese Aufgabe wird gelöst durch einen Energiespeicher gemäß den Merkmalen des Patentanspruches 1. Vorteilhafte Ausgestaltungen ergeben sich aus den abhängigen Patentansprüchen.

Die Erfindung schafft einen Energiespeicher für ein Kraftfahrzeug. Der Energiespeicher umfasst ein abgeschlossenes Gehäuse zur Aufnahme zumindest eines Energiespeichermoduls mit einer jeweiligen Anzahl an Speicherzellen. Der Energiespeicher umfasst weiter ein Druckausgleichselement zum Druckausgleich eines im Inneren des Gehäuses herrschenden Innendrucks mit einem Umgebungsdruck, wobei das Druckausgleichselement an einer Gehäusefläche angeordnet ist. Ferner umfasst der Energiespeicher eine Verschlussvorrichtung am Boden des Gehäuses zur Abfuhr vom in dem Gehäuseinneren sich sammelnden Kondensats. Erfindungsgemäß weist das Druckausgleichselement eine Drosselwirkung auf, welche eine positive Druckdifferenz, bei der ein gegenüber der Umgebung höherer Innendruck herrscht, langsamer abbaut als eine negative Druckdifferenz, bei der ein gegenüber dem Gehäuseinneren höherer Umgebungsdruck herrscht. Durch den Betrieb des Energiespeichers ist eine positive Druckdifferenz zyklisch herbeiführbar. Die Verschlussvorrichtung ist derart ausgebildet, dass diese bei Überschreiten eines ersten Schwellwerts der positiven Druckdifferenz öffnet, so dass Kondensat aus dem Gehäuseinneren abführbar ist und gleichzeitig die positive Druckdifferenz abbaubar ist.

Der Begriff "abgeschlossenes Gehäuse" ist in der vorliegenden Beschreibung derart zu verstehen, dass dieses dicht gegenüber auf das Gehäuse auftreffenden Fluiden ist.

Der erfindungsgemäße Energiespeicher nutzt zur Kondensatabfuhr die sich im Betrieb des Energiespeichers in einem Kraftfahrzeug automatisch ergebenden Druckunterschiede zwischen dem Gehäuseinneren und der Umgebung aus. Ist der Druckunterschied zwischen Gehäuseinnerem und Umgebung (sog. positive Druckdifferenz) größer als ein vorgegebener erster Schwellwert, so öffnet die Verschlussvorrichtung und leitet das im Gehäuseinneren gesammelte Kondensat aus dem Gehäuseinneren aus. Dadurch, dass zur Kondensatabfuhr keinerlei aktiven Elemente benötigt werden, kann die Verschlussvorrichtung mit geringen Kosten bereitgestellt werden. Darüber hinaus erlaubt es das Funktionsprinzip zur Kondensatabfuhr, die Verschlussvorrichtung mit minimalen Abmaßen bereitzustellen, so dass der benötigte Bauraum minimal ist.

Die Verschlussvorrichtung ist in einer Weiterbildung derart ausgebildet, dass diese bei einer Unterschreitung eines zweiten Schwellwerts der positiven Druckdifferenz zwischen dem Gehäuseinneren und der Umgebung die Verschlussvorrichtung das Gehäuseinnere gegenüber der Umgebung abgedichtet, wobei der zweite Schwellwert größer oder gleich dem ersten Schwellwert ist. Im Gegensatz zu den aus dem Stand der Technik bekannten Verschlussvorrichtungen, die auf einem Schwimmerprinzip basieren, ist die Verschlussvorrichtung aufgrund der üblicherweise herrschenden Druckverhältnisse geschlossen, so dass das Gehäuseinnere gegenüber der Umgebung abgedichtet ist. Lediglich, wenn die Bedingung des Überschreitens des ersten Schwellwerts der positiven Druckdifferenz erfüllt ist, öffnet die Verschlussvorrichtung und ermöglicht so das Abführen des Kondensats aus dem Gehäuseinneren sowie einen Druckausgleich, der automatisch zum Verschließen der Verschlussvorrichtung führt. Die erfindungsgemäße Variante weist den Vorteil auf, dass keine besonderen Maßnahmen gegenüber Verschmutzung der Verschlussvorrichtung getroffen werden müssen. Gegebenenfalls an der Verschlussvorrichtung anhaftende Schmutzpartikel werden durch das Auslaufen des Kondensats bei erfüllter Öffnungsbedingung "weggespült".

Der erste und/oder der zweite Schwellwert sind zweckmäßigerweise durch die geometrischen und/oder die Materialeigenschaften der Verschlussvorrichtung festgelegt. Durch die Ausgestaltung der Verschlussvorrichtung kann somit festgelegt werden, bei welcher positiven Druckdifferenz ein Öffnen der Verschlussvorrichtung erfolgt. Die positive Druckdifferenz kann alleine durch Luftdruckdifferenzen zwischen dem Gehäuseinneren und der Umgebung verursacht sein. Ebenso trägt auch das Kondensat zu einem Druck auf die Verschlussvorrichtung bei, so dass durch den Luftdruck lediglich noch die Differenz bis zu dem Schwellwert beigetragen werden muss.

In einer weiteren Ausgestaltung ist die Verschlussvorrichtung als passives Ventil, insbesondere als ein Rückschlagventil, ausgebildet. Hierdurch kann die Verschlussvorrichtung als besonders kostengünstiges Bauteil mit geringen Abmaßen bereitgestellt werden.

Es ist weiter zweckmäßig, wenn die Verschlussvorrichtung am Boden einer Vertiefung des Gehäusebodens ausgebildet ist. In der Vertiefung kann sich das Kondensat sammeln. Je nach Ausgestaltung der Vertiefung kann das sich in dieser Vertiefung sammelnde Kondensat einen Druck auf die Verschlussvorrichtung ausüben, sodass eine positive Druckdifferenz bereits unterhalb des ersten Schwellenwerts ausreichend ist, um die Verschlussvorrichtung zu öffnen.

Die Verschlussvorrichtung kann beispielsweise als sog. "Umbrella Valve" oder als durch eine Feder gegen eine Öffnung des Gehäuses gepresster Verschlusskörper ausgebildet sein. Umbrella Valves sind beispielsweise von der Firma Vernay erhältlich. Diese bestehen aus einem Regenschirm-ähnlichen Körper aus einem Elastomer, welcher entsprechend seiner geometrischen Abmaße und dem verwendeten Elastomer bei einem definierten Druck öffnet. Bei welchem Druck, d.h. bei welcher positiven Druckdifferenz ein Öffnen des Ventils erfolgen soll, kann beispielsweise durch Versuche ausfindig gemacht werden.

Die positive Druckdifferenz zwischen dem Gehäuseinneren gegenüber der Umgebung ist gemäß einer zweckmäßigen Ausgestaltung durch eines oder mehrere der nachfolgenden Ereignisse herbeiführbar: zyklisches Erwärmen und Abkühlen der Speicherzellen des Energiespeichermoduls; atmosphärische Luftdruckänderung; Überwindung eines Höhenunterschieds. Im Betrieb des Energiespeichers in einem Kraftfahrzeug können die genannten Ereignisse für sich alleine oder kombiniert auftreten. Das zyklische Erwärmen und Abkühlen der Speicherzellen des Energiespeichermoduls ist eine Folge von zeitlich aufeinanderfolgenden Lade- und Entladevorgängen des Energiespeichermoduls. Üblicherweise wird durch eines oder mehrere der genannten Ereignisse im Gehäuseinneren in zyklischen, nicht notwendigerweise gleichen Zeitabständen, eine positive Druckdifferenz herbeigeführt, welche dann zum Öffnen der Verschlussvorrichtung führt.

Gemäß einer weiteren zweckmäßigen Ausgestaltung ist vorgesehen, dass das Druckausgleichselement an einer Gehäusewand des Gehäuses angeordnet ist. Unter einer Gehäusewand sind dabei diejenigen Teile des Gehäuses zu verstehen, welche verschieden von dem Gehäuseboden sind. Das Druckausgleichselement umfasst vorzugsweise eine mikroporöse, hydrophobe Membran. Eine solche Membran weist die Eigenschaft auf, dass Luft und Wasserdampf durch die Membran hindurchtreten können. Ein Wassereintritt in das Gehäuseinnere, z.B. aufgrund einer Wasserdurchfahrt, wird durch die Membran jedoch verhindert. Sofern dies durch die Einbaulage des Energiespeichers in einem Kraftfahrzeug möglich ist, ist es bevorzugt, wenn die Membran in einem Bereich angeordnet ist, welcher oberhalb einer Watlinie des Kraftfahrzeugs liegt. Hierdurch kann die Gefahr eines Wassereintritts in das Gehäuseinnere durch die Membran hindurch weiter minimiert werden.

Gemäß einer weiteren zweckmäßigen Ausgestaltung umfasst das Druckausgleichselement ein Ventil, das seriell zu der Membran angeordnet ist, das bei einem gegenüber der Umgebung höheren Innendruck schließt, um einen Druckabbau über die Membran vollständig zu verhindern. Durch das Ventil wird sichergestellt, dass bei einer positiven Druckdifferenz zwischen dem Gehäuseinneren gegenüber der Umgebung kein Druckabbau über das Druckausgleichselement erfolgen kann. Der Druckabbau erfolgt in diesem Fall zusammen mit der Kondensatausleitung über die Verschlussvorrichtung. Der Vorteil dieser Variante besteht darin, dass die positive Druckdifferenz zum Öffnen des Ventils schneller erreicht werden kann.

Die Erfindung wird nachfolgend weiterhin anhand von Ausführungsbeispielen in der Zeichnung erläutert. Es zeigen:
- Fig. 1: eine schematische Querschnittsdarstellung eines ersten Ausführungsbeispiels eines erfindungsgemäßen Energiespeichers,
- Fig. 2 und 3: schematische Darstellungen, anhand denen das Funktionsprinzip des Energiespeichers gemäß der Fig. 1 erläutert wird,
- Fig. 4: eine schematische Querschnittsdarstellung eines zweiten Ausführungsbeispiels eines erfindungsgemäßen Energiespeichers, und
- Fig. 5 und 6: schematische Darstellungen, anhand denen das Funktionsprinzip des Energiespeichers gemäß der Fig. 4 erläutert wird.

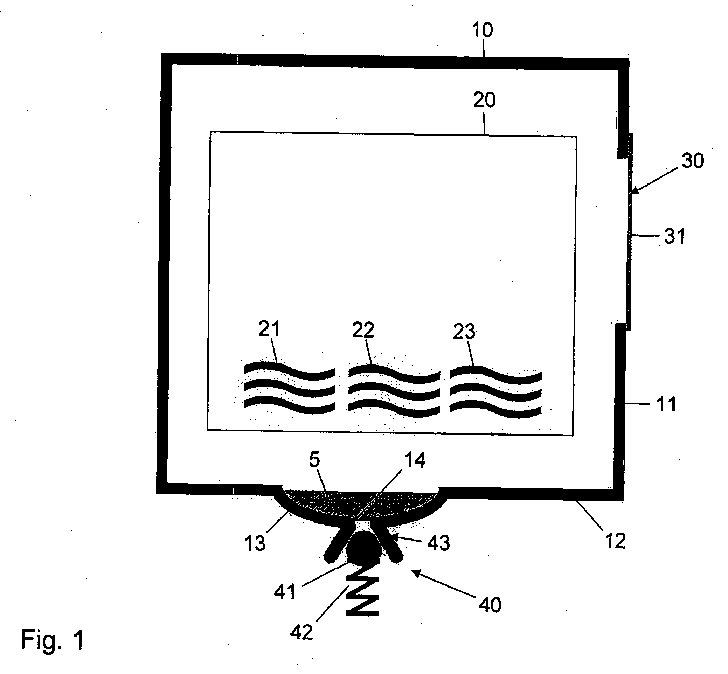

Fig. 1 zeigt ein erstes Ausführungsbeispiel eines erfindungsgemäßen Energiespeichers in einer Querschnittsdarstellung. Der Energiespeicher umfasst ein gegenüber der Umgebung abgeschlossenes, d.h. dichtes, Gehäuse 10. In dem Gehäuse 10 ist beispielhaft ein Energiespeichermodul 20 angeordnet. Entgegen der zeichnerischen Darstellung könnten in dem Gehäuse 10 auch mehrere Energiespeichermodule 20 nebeneinander und/oder übereinander vorgesehen sein. Das Energiespeichermodul 20 umfasst lediglich zu Illustrationszwecken drei Speicherzellen 21, 22, 23.

An einer Seitenwand 11 ist ein Druckausgleichselement 30 angeordnet. Das Druckausgleichselement 30 ist als mikroporöse, hydrophobe Membran 31 ausgebildet und dient zum Druckausgleich eines im Inneren des Gehäuses 10 herrschenden Innendrucks mit einem Umgebungsdruck. Die Membran 31 des Druckausgleichselements 30 ist derart beschaffen, dass diese eine Drosselwirkung aufweist. Die Drosselwirkung hat zur Folge, dass eine positive Druckdifferenz, bei der ein gegenüber der Umgebung höherer Innendruck in dem Gehäuse herrscht, langsamer abgebaut wird, als eine negative Druckdifferenz, bei der ein gegenüber dem Gehäuseinneren höherer Umgebungsdruck herrscht. Die Membran 31 sorgt weiterhin dafür, dass bei einer Wasserdurchfahrt kein Wasser in das Gehäuseinnere eintreten kann. Die mikroporöse, hydrophobe Membran erlaubt zwar den Durchtritt von Luft und Wasserdampf durch die Membran (in beiden Richtungen), jedoch wird ein Wassereintritt von der Umgebung in das Gehäuseinnere, bedingt durch die Materialeigenschaften, verhindert.

An einem Gehäuseboden 12 des Gehäuses 10 ist eine Verschlussvorrichtung 40 vorgesehen, welche zur Abfuhr von in dem Gehäuseinneren sich sammelnden Kondensats 5 dient. Die Verschlussvorrichtung 40, die als passives Ventil 43, insbesondere als Rückschlagventil, ausgebildet ist, ist am Boden einer Vertiefung 13 des Gehäusebodens 12 ausgebildet. Das Ventil 43 ist lediglich schematisch dargestellt und umfasst zur Illustration seiner Funktion ein Federelement 42, welches in der Verbindung mit einem kugelförmigen Verschlusskörper 41 steht. In der in Fig. 1 gezeigten Stellung verschließt der Verschlusskörper 41 eine Öffnung 14 am Boden der Vertiefung 13. In der Vertiefung sammelt sich das Kondensat 5, da durch Temperaturschwankungen der Speicherzellen 21, 22, 23 im Betrieb des Energiespeichermoduls sowie unterschiedliche Betriebsbedingungen des in einem Kraftfahrzeugs eingesetzten Energiespeichers sowie durch eine in der Figur nicht dargestellte Kühlung des Energiespeichermoduls 20 entsteht.

Zur Kondensatabfuhr wird ein zyklisch im Betreib des Energiespeichers auftretender Druckunterschied zwischen dem Gehäuseinneren und der Umgebung ausgenutzt, aus dem ein "Pumpeffekt" resultiert, der zum Abpumpen des Kondensats genutzt wird. Hier-durch bedingt kann die Kondensatabfuhr auf passive Weise, d.h. ohne aktiv zu betreibende Pumpen, erfolgen.

In der nachfolgenden Beschreibung wird auf eine aufgrund von Temperaturänderungen hervorgerufene Druckdifferenz Bezug genommen. Grundsätzlich kann diese jedoch auch durch eine Änderung des Luftdrucks, beispielsweise bei einer Berg- oder Talfahrt oder eine atmosphärische Druckänderung aufgrund einer sich ändernden Wetterlage hervorgerufen werden. Eine Temperaturänderung im Gehäuseinneren wird hauptsächlich durch Temperaturschwankungen beim Laden bzw. Entladen der Speicherzellen 21, 22, 23 des oder der Energiespeichermodule 20 herbeigeführt. Jedoch können auch Temperaturänderungen über die Zeit (beispielsweise eine Temperaturänderung im Laufe eines Tages), zu einer Druckdifferenz führen. Es versteht sich, dass auch eine Kombination der genannten Ereignisse eine Druckdifferenz bewirken kann, welche zur Abfuhr von Kondensat aus dem Gehäuseinneren genutzt werden kann.

Durch ein zyklisches Erwärmen und Abkühlen der Luft im Gehäuseinneren entsteht in Verbindung mit dem Ventil ein Pumpeffekt, der das Kondensat 5 gegen die Schließkraft des Ventils 43 aus dem Gehäuseinneren 100 drückt.

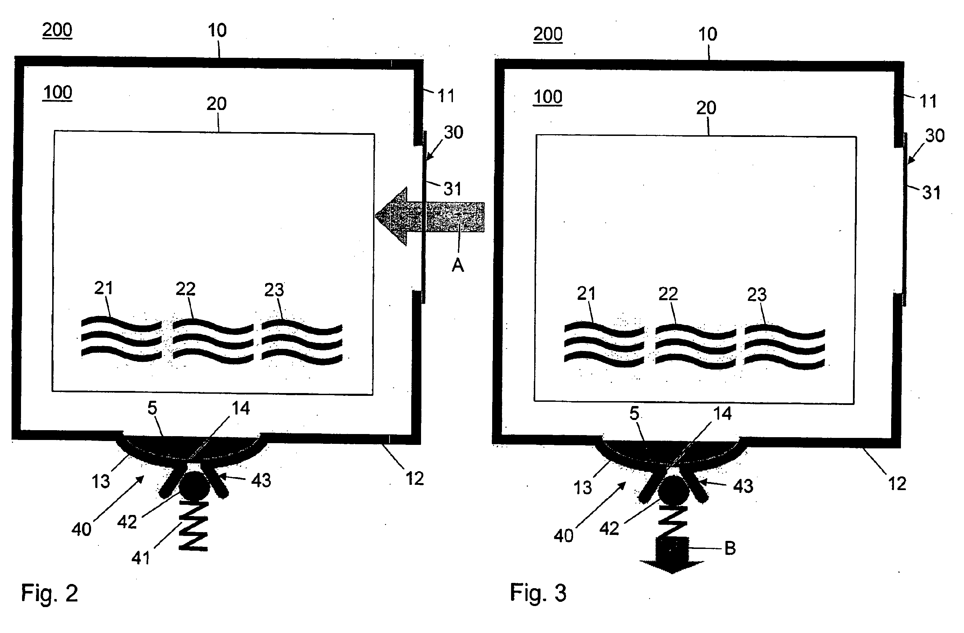

Beim Abkühlen des Energiespeichermoduls (vgl. Fig. 2) entsteht im Gehäuseinneren 100 ein Unterdruck, wodurch Luft von der Umgebung 200 ins Gehäuseinnere 100 durch die Membran 31 hindurch angesaugt wird (vgl. Luftstrom A). Das Ventil 40 bleibt aufgrund der Druckverhältnisse dabei geschlossen. Die in dem Luftstrom A enthaltene Feuchtigkeit kondensiert im Gehäuseinneren aus und sammelt sich in der Vertiefung 13 am Gehäuseboden 12. Die Abkühlung des Energiespeichermoduls kann z.B. durch eine aktive Kühlung der Speicherzellen 21, 22, 23 bewirkt sein.

Beim Erwärmen des Energiespeichermoduls, beispielsweise durch eine Leistungsentnahme, erwärmt sich die Luft im Gehäuseinneren, so dass ein Überdruck (sog. Positive Druckdifferenz) entsteht. Beim Überschreiten eines durch die geometrischen und/oder die Materialeigenschaften der Verschlussvorrichtung festgelegten Schwellwerts wird das Kondensat durch das im Ventil 43 aus dem Gehäuse 10 gefördert (vgl. Kondensatausleitung B). Mit dem Ausleiten des Kondensats 5 über die Öffnung 14 wird gleichzeitig die positive Druckdifferenz abgebaut. Dies hat zur Folge, dass das Ventil 43 sich selbsttätig wieder schließt, wenn der Differenzdruck nicht mehr ausreichend ist, die Öffnungskraft des Ventils zu überwinden.

Das Ventil 43 kann beispielsweise als sog. "Umbrella Valve" ausgebildet sein, wie diese von der Firma Vernay verfügbar sind. Diese im Querschnitt die Gestalt eines Regenschirmes aufweisenden Ventile sind derart ausgestaltet, dass bei einem Öffnungsdruck von ca. 12 mbar (entsprechend einer Wassersäule von 120 mm) auf den "Schirm" eine Öffnung erfolgt. Ein solches Umbrella Valve besteht aus einem Elastomer und kann durch das einfache Einführen des "Schirmhalters" in eine korrespondierende Öffnung am Boden des Gehäuses befestigt werden. Über einen, um die Befestigung verlaufenden Ringspalt, der bei Unterschreitung des Öffnungsdrucks durch den Schirm bedeckt ist, kann dann das Kondensat nach Öffnung des Schirms ausgeleitet werden.

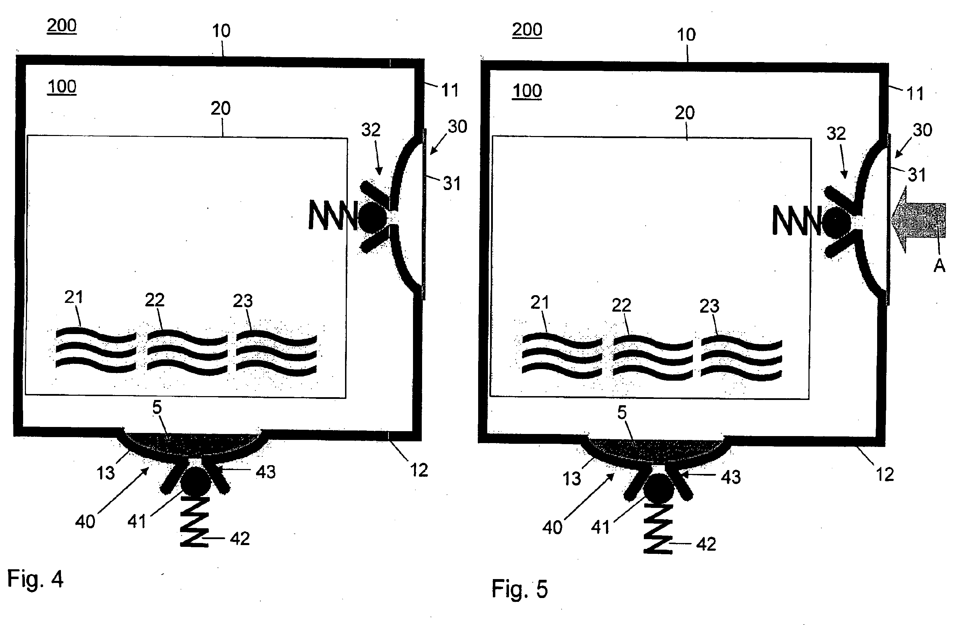

Fig. 4 zeigt ein zweites Ausführungsbeispiel eines erfindungsgemäßen Energiespeichers in einer Querschnittsdarstellung. Zusätzlich zu der ersten, in Fig. 2 gezeigten Variante ist im Gehäuseinneren 100 vor der Membran 31 ein (Rückschlag-)Ventil 32 angeordnet.

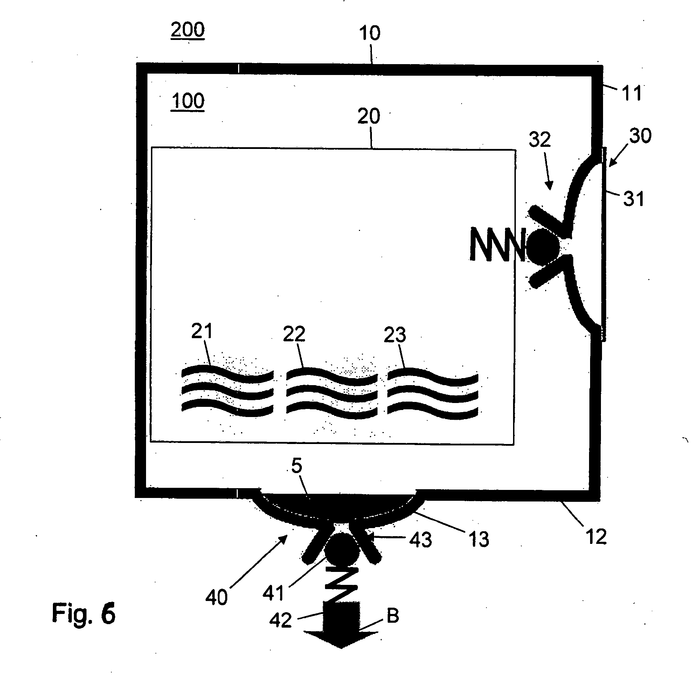

Beim Abkühlen der Speicherzellen 21, 22, 23 entsteht im Gehäuseinneren 100, wie beschrieben, ein Unterdruck. Das Ventil 32 erlaubt aufgrund seiner Anordnung einen in das Gehäuseinnere 100 fließenden Luftstrom A. Die durch den Luftstrom A ins Gehäuseinnere transportierte Feuchtigkeit kondensiert im Gehäuseinneren 100 aus und sammelt sich in der Vertiefung 13. Beim Erwärmen (vgl. Fig. 6) der Speicherzellen 21, 22, 23 des Energiespeichermoduls 20 entsteht ein positiver Differenzdruck, d.h. der Gehäuseinnendruck ist höher als der Druck der Umgebung. Übersteigt die positive Druckdifferenz den durch die Konstruktion des Ventils 43 festgelegten Schwellwert, so wird das in der Vertiefung gesammelte Kondensat 5 durch das Ventil 40 aus dem Gehäuseinneren nach außen befördert (Bezugszeichen B).

Ein Vorteil gegenüber der in Fig. 1 bis 3 gezeigten Variante besteht darin, dass die Permeabilität der Membran 31 für die Funktion des Ausleitens des Kondensats nicht relevant ist. Hierdurch wird der notwendige Öffnungsdruck im Vergleich zur ersten Variante schneller erreicht.

Das Kondensatabfuhrverhalten des Energiespeichers gemäß der zweiten Ausführungsvariante wird nachfolgend anhand eines Beispiels verdeutlicht.

Öffnungsschwelle für das Ventil 40 bei einer Passfahrt

Um eine Druckänderung von 1 mbar zwischen dem Gehäuseinneren 100 und der Umgebung 200 herzustellen, ist die Überwindung eines Höhenunterschiedes von 8 m erforderlich. Erfolgt die Öffnung des Ventils 40 beispielsweise bei 12 mbar, so muss ein Höhenunterschied von 96 m überwunden werden, um das Ventil zu öffnen.

Öffnungsschwelle bei einer Temperaturänderung

Eine Temperaturänderung von 20 °C auf 23,7 °C entspricht einer Druckänderung im Gehäuseinneren 100 von 12 mbar, welcher einem beispielhaft gewählten Ventilöffnungsdruck entspricht.

Zur Kondensatausleitung wird bei dem erfindungsgemäßen Energiespeicher ein Druckunterschied zwischen dem Gehäuseinneren und der Umgebung ausgenutzt. Die Druckdifferenz kann durch eine Temperaturänderung und/oder eine atmosphärische Druckänderung und/oder eine Druckänderung aufgrund einer Berg- bzw. Talfahrt herbeigeführt werden. Ist eine ausreichend große Druckdifferenz bereitgestellt, so kann durch die Verwendung eines einfachen, passiven Ventils in Verbindung mit einer eine Drosselwirkung aufweisenden Membran eine Kondensatausleitung bewirkt werden. Die Vorrichtung zur Kondensatausleitung weist eine geringe Bauhöhe auf und kann mit preiswerten Bauteilen realisiert werden.

### Bezugszeichenliste

- 5: Kondensat
- 10: Gehäuse
- 11: Gehäusewand
- 12: Gehäuseboden
- 13: Vertiefung
- 14: Öffnung
- 20: Energiespeichermodul
- 21: Speicherzellen
- 22: Speicherzellen
- 30: Druckausgleichselement
- 31: Membran
- 32: Ventil
- 40: Verschlussvorrichtung
- 41: Verschlusskörper
- 42: Federelement
- 43: Ventil
- 100: Gehäuseinnere
- 200: Umgebung
- A: Luftstrom von der Umgebung ins Gehäuseinnere
- B: Kondensatabfluss

## Patentansprüche

1. Energiespeicher für ein Kraftfahrzeug, umfassend:
- ein abgeschlossenes Gehäuse (10) zur Aufnahme zumindest eines Energiespeichermoduls (20) mit einer jeweiligen Anzahl an Speicherzellen (21, 21, 22);
- ein Druckausgleichselement (30) zum Druckausgleich eines im Inneren des Gehäuses (10) herrschenden Innendrucks mit einem Umgebungsdruck, das an einer Gehäusefläche angeordnet ist;
- eine Verschlussvorrichtung (40) am Boden (12) des Gehäuses (10) zur Abfuhr von in dem Gehäuseinneren sich sammelnden Kondensats;
**dadurch gekennzeichnet, dass**
- das Druckausgleichselement (30) eine Drosselwirkung aufweist, welche eine positive Druckdifferenz, bei der ein gegenüber der Umgebung höherer Innendruck herrscht, langsamer abbaut als eine negative Druckdifferenz, bei der ein gegenüber dem Gehäuseinneren höherer Umgebungsdruck herrscht;
- durch den Betrieb des Energiespeichers eine positive Druckdifferenz zyklisch herbeiführbar ist; und
- die Verschlussvorrichtung (40) derart ausgebildet ist, dass diese spätestens bei Überschreiten eines ersten Schwellwerts der positiven Druckdifferenz öffnet, so dass Kondensat aus dem Gehäuseinneren abführbar ist und gleichzeitig die positive Druckdifferenz abbaubar ist.

2. Energiespeicher nach Anspruch 1, **dadurch gekennzeichnet, dass** die Verschlussvorrichtung (40) derart ausgebildet ist, dass diese bei einer Unterschreitung eines zweiten Schwellwerts, der kleiner oder gleich dem ersten Schwellwert ist, der positive Druckdifferenz zwischen dem Gehäuseinneren und der Umgebung die Verschlussvorrichtung (40) das Gehäuseinnere (100) gegenüber der Umgebung (200) abdichtet.

3. Energiespeicher nach Anspruch 1 oder 2, **dadurch gekennzeichnet, dass** der erste und/oder der zweite Schwellwert durch die geometrischen und/oder die Materialeigenschaften der Verschlussvorrichtung festgelegt sind.

4. Energiespeicher nach einem der vorhergehenden Ansprüche, **dadurch gekennzeichnet, dass** die Verschlussvorrichtung (40) als passives Ventil (43), insbesondere als Rückschlagventil, ausgebildet ist.

5. Energiespeicher nach einem der vorhergehenden Ansprüche, **dadurch gekennzeichnet, dass** die Verschlussvorrichtung (40) am Boden einer Vertiefung (13) des Gehäusebodens (12) ausgebildet ist.

6. Energiespeicher nach einem der vorhergehenden Ansprüche, **dadurch gekennzeichnet, dass** die Verschlussvorrichtung (40) als sog. Umbrella Valve oder als durch eine Feder gegen eine Öffnung des Gehäuses gepresster Verschlusskörper ausgebildet ist.

7. Energiespeicher nach einem der vorhergehenden Ansprüche, **dadurch gekennzeichnet, dass** die positive Druckdifferenz zwischen dem Gehäuseinneren gegenüber der Umgebung durch eines oder mehrere der nachfolgenden Ereignisse herbeiführbar ist:
- zyklisches Erwärmen und Abkühlen der Speicherzellen (21, 22, 23) des Energiespeichermoduls (20);
- atmosphärische Luftdruckänderung;
- Überwindung eines Höhenunterschieds.

8. Energiespeicher nach einem der vorhergehenden Ansprüche, **dadurch gekennzeichnet, dass** das Druckausgleichselement (30) an einer Gehäusewand (11) des Gehäuses (10) angeordnet ist.

9. Energiespeicher nach einem der vorhergehenden Ansprüche, **dadurch gekennzeichnet, dass** das Druckausgleichselement (30) eine mikroporöse, hydrophobe Membran (31) umfasst.

10. Energiespeicher nach Anspruch 9, **dadurch gekennzeichnet, dass** das Druckausgleichselement (30) ein Ventil (32) umfasst, das seriell zu der Membran angeordnet ist, das bei einem gegenüber der Umgebung höheren Innendruck schließt, um einen Druckabbau über die Membran zu verhindern.

## Claims

1. An energy storage unit for a motor vehicle, comprising:
- a closed casing (10) for holding at least one energy storage module (20), each having a respective number of storage cells (21, 21, 22);
- a pressure compensating element (30) disposed on a surface of the casing so as to balance a pressure in the casing (10) against the environmental pressure, and
- a closure device (40) at the bottom (12) of the casing (10) for discharging condensate accumulating inside the casing,
**characterised in that**
- the pressure compensating element (30) has a throttle effect whereby a positive pressure difference, when the internal pressure is greater than the environmental, pressure, is reduced more slowly than a negative pressure difference when the environmental pressure is greater than the pressure in the casing,
- operation of the energy storage results in a positive pressure difference in cycles, and
- the closure device (40) is constructed so that it opens at the latest when a first threshold value of the positive pressure difference is exceeded, so that condensate can be discharged from the interior of the casing and the positive pressure difference is also reduced.

2. An energy storage unit according to claim 1, **characterised in that** the closure device (40) is so constructed that when the reading is below a second threshold value, smaller than or equal to the first threshold value, the positive pressure difference between the interior of the casing and the environment [of] the closure device (40) seals the interior of the casing (100) off from the environment (200).

3. An energy storage unit according to claim 1 or 2, **characterised in that** the first and/or the second threshold value is determined by the shape and/or the properties of the material constituting the closure device.

4. An energy storage unit according to any of the preceding claims, **characterised in that** the closure device (40) is a passive valve (43), particularly a non-return valve.

5. A unit according to any of the preceding claims, **characterised in that** the closure device (40) is formed at the bottom of a recess (13) in the base of the casing (12).

6. An energy storage unit according to any of the preceding claims, **characterised in that** the closure device (40) is an umbrella valve or a closure member pressed by a spring against an opening in the casing.

7. An energy storage unit according to any of the preceding claims, **characterised in that** the positive pressure difference between the interior of the casing and the environment is the result of one or more of the following events:
- cyclic heating and cooling of the storage cells (21, 22, 23) of the energy storage module (20);
- atmospheric change in air pressure;
- overcoming the difference in height.

8. An energy storage unit according to any of the preceding claims, **characterised in that** the pressure compensating element (30) is disposed on a wall (11) of the casing (10).

9. An energy storage unit according to any of the preceding claims, **characterised in that** the pressure compensating element (30) comprises a microporous hydrophobic diaphragm (31).

10. An energy storage unit according to claim 9, **characterised in that** the pressure compensating element (30) comprises a valve (32) disposed in series with the diaphragm and closing when the internal pressure is higher than the environmental pressure, in order to prevent the pressure decreasing via the diaphragm.

## Revendications

1. Accumulateur d'énergie pour un véhicule automobile comprenant :
- un boitier fermé (10) de réception d'au moins un module accumulateur d'énergie (20) renfermant un nombre respectif de cellules d'accumulation (21, 22, 23),
- un élément d'équilibrage de pression (30) pour équilibrer la pression interne régnant à l'intérieur du boitier (10) avec la pression environnante qui s'applique sur la surface du boitier,
- un dispositif de fermeture (40) situé au fond (12) du boitier (10) pour permettre l'évacuation du condensat se rassemblant à l'intérieur du boitier,
**caractérisé en ce que**
- l'élément d'équilibrage de pression (30) présente un effet d'étranglement qui relâche une différence de pression positive selon laquelle la pression régnant à l'intérieur du boitier est supérieure à la pression environnante, plus lentement qu'une différence de pression négative selon laquelle la pression environnante est supérieure à la pression régnant à l'intérieur du boitier,
- le fonctionnement de l'accumulateur d'énergie provoque cycliquement une différence de pression positive, et
- le dispositif de fermeture (40) est conçu de sorte que celui-ci s'ouvre plus tard lors du dépassement d'une première valeur de seuil de la différence de pression positive de sorte que du condensat puisse être extrait de l'intérieur du boitier et que simultanément la différence de pression positive puisse être relâchée.

2. Accumulateur d'énergie conforme à la revendication 1,
**caractérisé en ce que**
le dispositif de fermeture (40) est réalisé de sorte qu'en présence d'un dépassement par le bas d'une seconde valeur de seuil qui est inférieure ou égale à la première valeur de seuil de la différence de pression positive entre l'intérieur du boitier et l'environnement, ce dispositif de fermeture (40) réalise l'étanchéité de l'intérieur du boitier (100) vis-à-vis de l'environnement (200).

3. Accumulateur d'énergie conforme à la revendication 1 ou 2,
**caractérisé en ce que**
la première et/ou la seconde valeur de seuil est(sont) fixée(s) par les propriétés géométriques et/ou de matériaux du dispositif de fermeture.

4. Accumulateur d'énergie conforme à l'une des revendications précédentes,
**caractérisé en ce que**
le dispositif de fermeture (40) est réalisé sous la forme d'une soupape passive (43), en particulier d'une soupape anti-retour.

5. Accumulateur d'énergie conforme à l'une des revendications précédentes,
**caractérisé en ce que**
le dispositif de fermeture (40) est réalisé au fond d'une cavité (13) située au fond du boitier (12).

6. Accumulateur d'énergie conforme à l'une des revendications précédentes,
**caractérisé en ce que**
le dispositif de fermeture (40) est réalisé sous la forme d'une soupape en forme de parapluie ou sous la forme d'un corps de fermeture comprimé par un ressort contre une ouverture du boitier.

7. Accumulateur d'énergie conforme à l'une des revendications précédentes,
**caractérisé en ce que**
la différence de pression positive entre l'intérieur du boitier et l'environnement peut être obtenue par un ou plusieurs des moyens suivants :
- chauffage et refroidissement cyclique des cellules d'accumulation (21, 22, 23) du module accumulateur d'énergie (20),
- variation de la pression d'air atmosphérique,
- franchissement d'une différence de hauteur.

8. Accumulateur d'énergie conforme à l'une des revendications précédentes,
**caractérisé en ce que**
l'élément d'équilibrage de pression (30) est monté sur une paroi (11) du boitier.

9. Accumulateur d'énergie conforme à l'une des revendications précédentes,
**caractérisé en ce que**
l'élément d'équilibrage de pression (30) comprend une membrane hydrophobe microporeuse (31).

10. Accumulateur d'énergie conforme à la revendication 9,
**caractérisé en ce que**
l'élément d'équilibrage de pression (30) comprend une soupape (32) montée en série avec la membrane qui se ferme lorsque la pression interne est supérieure à la pression environnante pour éviter une chute de pression sur la membrane.
